# FASCICULE DE BREVET EUROPEEN

(11) **EP 3 299 214 B1**
(45) Date de publication et mention de la délivrance du brevet: **22.04.2020**
(21) Numéro de dépôt: 17191965.7
(22) Date de dépôt: 19.09.2017
(51) Int. Cl.: B60N 2/58, B60N 2/70, B60N 3/10

(54) **COMPOSANT DE SIÈGE DE VÉHICULE AUTOMOBILE**
SITZKOMPONENTE EINES KRAFTFAHRZEUGS
COMPONENT OF A MOTOR VEHICLE SEAT

(30) Priorité: 20.09.2016 FR 1658823
(43) Date de publication de la demande: 28.03.2018
(73) Titulaire: Cera TSC, 75008 Paris (FR)
(72) Inventeur: COURTOT, Eric, 51130 Vertus (FR)
(74) Mandataire: Sayettat, Julien Christian

(56) Documents cités:
- WO-A1-2013/114456
- GB-A- 2 454 249
- US-A1- 2010 244 507
- US-A1- 2013 258 670

## Description

L'invention concerne un composant de siège de véhicule automobile ainsi qu'un procédé de réalisation d'un tel composant.

Il est connu, notamment du document US-2010/0244507, de réaliser un composant de siège de véhicule automobile - notamment sous forme d'accoudoir escamotable - ledit composant comprenant :
- une armature,
- un bloc de rembourrage à base de mousse élastiquement compressible, ledit bloc surmoulant ladite armature,
- une coiffe de revêtement dudit bloc, ladite coiffe étant surmoulée par ledit bloc,
- un bac de réception d'objets, notamment en forme de porte-gobelets, par exemple en matériau plastique moulé, ledit bac étant surmoulé par ledit bloc, ledit bac présentant une ouverture dont la périphérie est disposée en correspondance avec un orifice prévu dans ladite coiffe.

Avec un tel composant, se pose le problème d'éviter toute fuite de mousse, lors de sa formation, entre le bac et l'orifice.

En effet, une telle fuite se traduirait par une présence de mousse en périphérie de l'orifice, ce qui est inacceptable d'un point de vue esthétique.

L'invention a pour but de proposer un agencement permettant de prévenir une telle fuite de mousse lors de la réalisation du composant.

A cet effet, et selon un premier aspect, l'invention propose un composant de siège de véhicule automobile, ledit composant comprenant :
- une armature,
- un bloc de rembourrage à base de mousse élastiquement compressible, ledit bloc surmoulant ladite armature,
- une coiffe de revêtement dudit bloc, ladite coiffe étant surmoulée par ledit bloc,
- un bac de réception d'objets, ledit bac étant surmoulé par ledit bloc, ledit bac présentant une ouverture dont la périphérie est disposée en correspondance avec un orifice prévu dans ladite coiffe, ledit bac étant conformé de manière à présenter, en périphérie de ladite ouverture, un rebord saillant vers l'extérieur, ledit rebord définissant une surface d'appui recevant une bordure de ladite coiffe s'étendant en périphérie dudit orifice,
ledit composant présentant en outre les caractéristiques suivantes :
- il comprend en outre une couronne d'étanchéité à la mousse surmoulée par ledit bloc, ladite couronne étant fixée à ladite armature, ledit bac étant inséré dans ladite couronne, ladite couronne présentant un bord d'appui s'appuyant contre ladite bordure de manière à la pincer entre ladite surface d'appui et ledit bord, afin d'empêcher le passage de mousse entre ledit bac et ledit orifice,
- ledit bac est pourvu de premiers moyens d'emboitement sur ladite armature et/ou sur ladite couronne.

Avec l'agencement proposé, on garantit l'absence de passage de mousse entre le bac et l'orifice de par la présence de la couronne d'étanchéité dont le bord s'appuie contre la bordure de coiffe s'étendant en périphérie de l'orifice, de manière à la pincer entre la surface d'appui et ledit bord.

Selon un deuxième aspect, l'invention propose un procédé de réalisation d'un tel composant.

D'autres particularités et avantages de l'invention apparaîtront dans la description qui suit, faite en référence aux figures jointes, dans lesquelles :

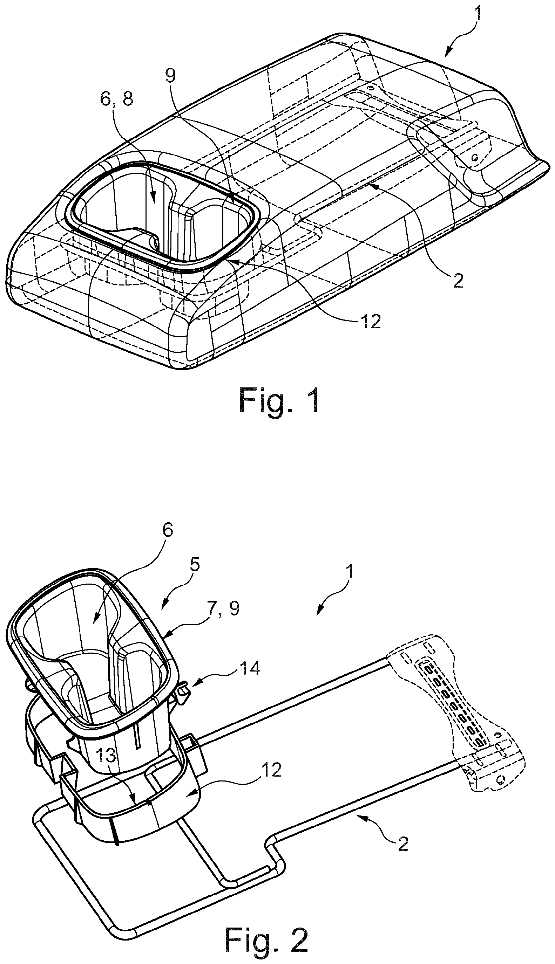

- la figure 1 est une vue schématique en perspective d'un composant selon une réalisation,
- la figure 2 est une vue schématique en perspective partielle éclatée du composant de la figure 1,

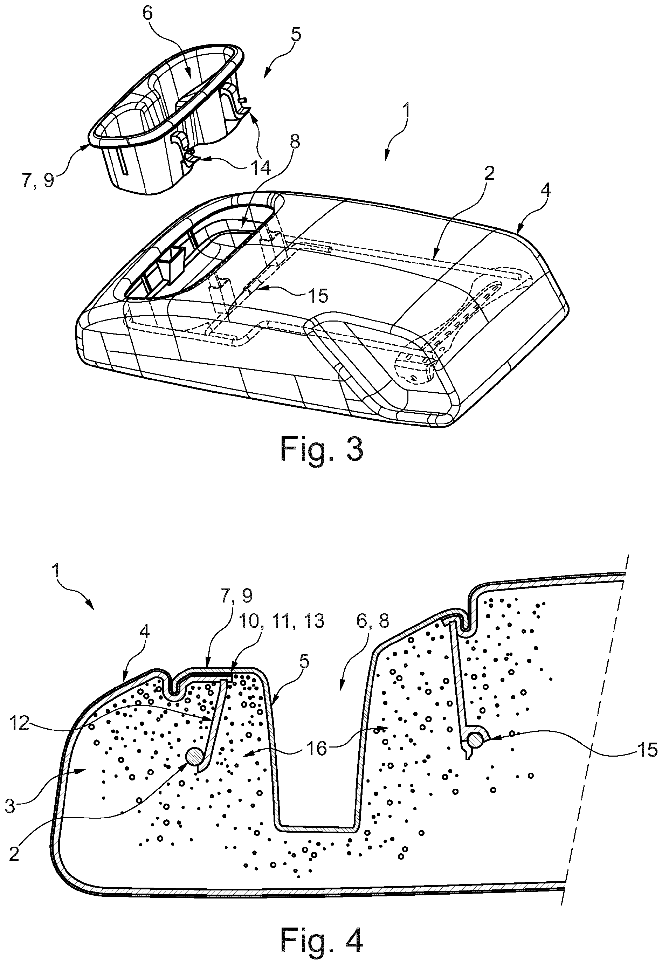

- la figure 3 est une vue schématique en perspective partielle semi-éclatée du composant de la figure 1,
- la figure 4 est une vue schématique en coupe partielle du composant de la figure 1 selon un premier plan de coupe,

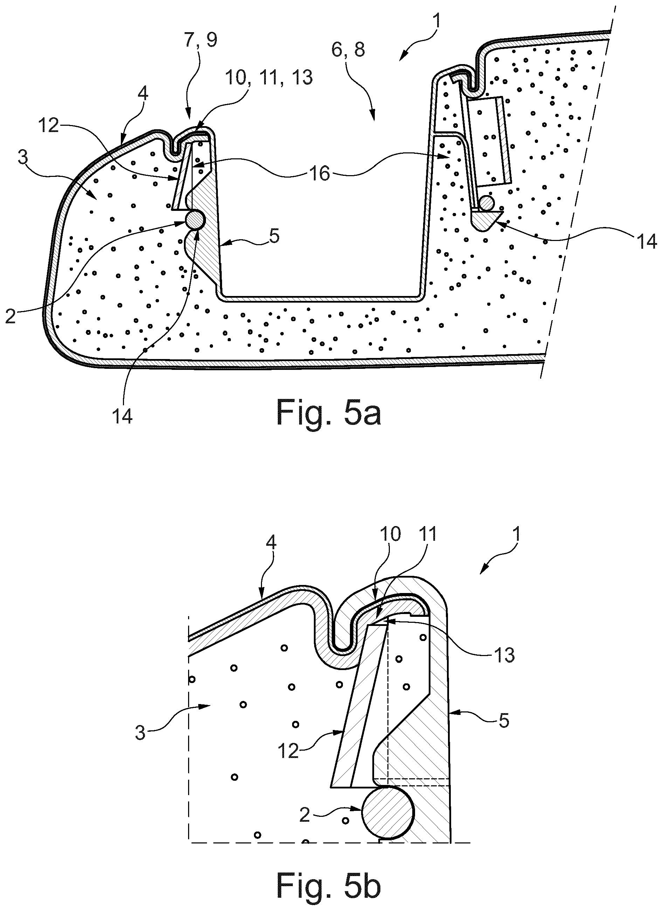

- la figure 5a est une vue schématique en coupe partielle du composant de la figure 1 selon un deuxième plan de coupe, la figure 5b étant un agrandissement de détail de la figure 5a.

En référence aux figures, on décrit un composant 1 de siège de véhicule automobile - ici sous forme d'accoudoir escamotable -, ledit composant comprenant :
- une armature 2,
- un bloc 3 de rembourrage à base de mousse - notamment de polyuréthanne - élastiquement compressible, ledit bloc surmoulant ladite armature,
- une coiffe 4 de revêtement - par exemple à base de tissu ou de cuir - dudit bloc, ladite coiffe étant surmoulée par ledit bloc,
- un bac 5 de réception d'objets - ici sous forme de porte-gobelets, notamment en matériau plastique moulé -, ledit bac étant surmoulé par ledit bloc, ledit bac présentant une ouverture 6 dont la périphérie 7 est disposée en correspondance avec un orifice 8 prévu dans ladite coiffe,
ledit composant présentant en outre les caractéristiques suivantes :
- ledit bac est conformé de manière à présenter, en périphérie de ladite ouverture, un rebord 9 saillant vers l'extérieur, ledit rebord définissant une surface d'appui 10 recevant une bordure 11 de ladite coiffe s'étendant en périphérie dudit orifice,
- il comprend en outre une couronne 12 d'étanchéité à la mousse - notamment en matériau plastique moulé - surmoulée par ledit bloc, ladite couronne étant fixée à ladite armature, ledit bac étant inséré dans ladite couronne, ladite couronne présentant un bord d'appui 13 s'appuyant contre ladite bordure de manière à la pincer entre ladite surface d'appui et ledit bord, afin d'empêcher le passage de mousse entre ledit bac et ledit orifice,
- ledit bac est pourvu de premiers moyens d'emboitement 14 sur ladite armature - selon la réalisation représentée - et/ou sur ladite couronne.

Selon la réalisation représentée, l'armature 2 comprend un fil métallique replié.

Selon la réalisation représentée, la couronne 12 est fixée à l'armature 2 par des deuxièmes moyens d'emboitement 15.

Selon la réalisation représentée, un espace 16 vacant est prévu entre la couronne 12 et le bac 5 de manière à permettre l'insertion de mousse dans ledit espace, afin de renforcer la tenue dudit bac sur le composant 1.

Selon un mode de réalisation non représenté, le bord d'appui 13 est pourvu de picots s'enfilant dans la bordure 11 de la coiffe 4, afin de permettre de bloquer ladite bordure en position nominale lors de la fabrication du composant 1.

On décrit enfin un procédé de réalisation d'un tel composant 1, ledit procédé comprenant les étapes suivantes :
- insérer l'armature 2 dans la coiffe 4,
- fixer, avant ou après insertion de ladite armature dans ladite coiffe, la couronne 12 d'étanchéité sur ladite armature,
- disposer la bordure 11 de ladite coiffe s'étendant en périphérie de son orifice 8 en recouvrement du bord d'appui 13 de ladite couronne,
- insérer le bac 5 dans ledit orifice jusqu'à pincer ladite bordure entre la surface d'appui 10 dudit bac et ledit bord d'appui et à réaliser son emboitement sur ladite armature - selon la réalisation représentée - et/ou sur ladite couronne,
- disposer l'ensemble obtenu dans un moule et injecter un mélange précurseur de mousse élastiquement compressible dans ladite coiffe de manière à réaliser le bloc 3 de rembourrage surmoulant ladite armature, ladite coiffe, ladite couronne et ledit bac.

## Revendications

1. Composant (1) de siège de véhicule automobile, ledit composant comprenant :
• une armature (2),
• un bloc (3) de rembourrage à base de mousse élastiquement compressible, ledit bloc surmoulant ladite armature,
• une coiffe (4) de revêtement dudit bloc, ladite coiffe étant surmoulée par ledit bloc,
• un bac (5) de réception d'objets, ledit bac étant surmoulé par ledit bloc, ledit bac présentant une ouverture (6) dont la périphérie (7) est disposée en correspondance avec un orifice (8) prévu dans ladite coiffe, ledit bac étant conformé de manière à présenter, en périphérie de ladite ouverture, un rebord (9) saillant vers l'extérieur, ledit rebord définissant une surface d'appui (10) recevant une bordure (11) de ladite coiffe s'étendant en périphérie dudit orifice,
ledit composant étant **caractérisé en ce que** :
• il comprend en outre une couronne (12) d'étanchéité à la mousse surmoulée par ledit bloc, ladite couronne étant fixée à ladite armature, ledit bac étant inséré dans ladite couronne, ladite couronne présentant un bord d'appui (13) s'appuyant contre ladite bordure de manière à la pincer entre ladite surface d'appui et ledit bord, afin d'empêcher le passage de mousse entre ledit bac et ledit orifice,
• ledit bac est pourvu de premiers moyens d'emboitement (14) sur ladite armature et/ou sur ladite couronne.

2. Composant selon la revendication 1, **caractérisé en ce que** l'armature (2) comprend un fil métallique replié.

3. Composant selon l'une des revendications 1 ou 2, **caractérisé en ce que** la couronne (12) est fixée à l'armature par des deuxièmes moyens d'emboitement (15).

4. Composant selon l'une quelconque des revendications 1 à 3, **caractérisé en ce qu'**un espace (16) vacant est prévu entre la couronne (12) et le bac (5) de manière à permettre l'insertion de mousse dans ledit espace, afin de renforcer la tenue dudit bac sur ledit composant.

5. Composant selon l'une quelconque des revendications 1 à 4, **caractérisé en ce que** le bord d'appui (13) est pourvu de picots s'enfilant dans la bordure (11) de la coiffe (4).

6. Procédé de réalisation d'un composant (1) selon l'une quelconque des revendications 1 à 5, ledit procédé comprenant les étapes suivantes :
• insérer l'armature (2) dans la coiffe (4),
• fixer, avant ou après insertion de ladite armature dans ladite coiffe, la couronne (12) d'étanchéité sur ladite armature,
• disposer la bordure (11) de ladite coiffe s'étendant en périphérie de son orifice (8) en recouvrement du bord d'appui (13) de ladite couronne,
• insérer le bac (5) dans ledit orifice jusqu'à pincer ladite bordure entre la surface d'appui (10) dudit bac et ledit bord d'appui et à réaliser son emboitement sur ladite armature et/ou sur ladite couronne,
• disposer l'ensemble obtenu dans un moule et injecter un mélange précurseur de mousse élastiquement compressible dans ladite coiffe de manière à réaliser le bloc (3) de rembourrage surmoulant ladite armature, ladite coiffe, ladite couronne et ledit bac.

## Patentansprüche

1. Kraftfahrzeugsitz-Komponente (1), wobei die Komponente umfasst:
- eine Bewehrung (2),
- einen Polsterblock (3) auf Basis von elastisch komprimierbarem Schaum, wobei der Block die Bewehrung umformt,
- eine Haube (4) zum Verkleiden des Blocks, wobei die Haube vom Block umformt wird,
- eine Wanne (5) zum Aufnehmen von Gegenständen, wobei die Wanne vom Block umformt wird, wobei die Wanne eine Öffnung (6) aufweist, deren Umfang (7) in Entsprechung mit einem Loch (8) angeordnet ist, das in der Haube vorgesehen ist, wobei die Wanne so ausgestaltet ist, dass sie am Umfang der Öffnung einen nach außen springenden Rand (9) aufweist, wobei der Rand eine Auflagefläche (10) definiert, die eine Umrandung (11) der Haube aufnimmt, welche sich am Umfang des Lochs erstreckt,
wobei die Komponente **dadurch gekennzeichnet ist, dass**:
- sie weiter einen Kranz (12) zur Abdichtung gegenüber dem Schaum umfasst, der vom Block umformt wird, wobei der Kranz an der Bewehrung befestigt ist, wobei die Wanne in den Kranz eingefügt ist, wobei der Kranz eine Auflagekante (13) aufweist, die so an der Umrandung aufliegt, dass sie dieselbe zwischen der Auflagefläche und der Kante einzwickt, um den Durchtritt von Schaum zwischen der Wanne und dem Loch zu verhindern,
- die Wanne an der Bewehrung und/oder am Kranz mit ersten Eingriffsmitteln (14) versehen ist.

2. Komponente nach Anspruch 1, **dadurch gekennzeichnet, dass** die Bewehrung (2) einen gebogenen Metalldraht umfasst.

3. Komponente nach einem der Ansprüche 1 oder 2, **dadurch gekennzeichnet, dass** der Kranz (12) durch zweite Eingriffsmittel (15) an der Bewehrung befestigt ist.

4. Komponente nach einem der Ansprüche 1 bis 3, **dadurch gekennzeichnet, dass** zwischen dem Kranz (12) und der Wanne (5) ein freier Raum (16) so vorgesehen ist, dass das Einfügen von Schaum in den Raum ermöglicht wird, um den Halt der Wanne an der Komponente zu verstärken.

5. Komponente nach einem der Ansprüche 1 bis 4, **dadurch gekennzeichnet, dass** die Auflagekante (13) mit Spitzen versehen ist, die sich in die Umrandung (11) der Haube (4) eindrücken.

6. Verfahren zur Herstellung einer Komponente (1) nach einem der Ansprüche 1 bis 5, wobei das Verfahren die folgenden Schritte umfasst:
- Einfügen der Bewehrung (2) in die Haube (4),
- Befestigen des Dichtungskranzes (12) vor oder nach dem Einfügen der Bewehrung in die Haube an der Bewehrung,
- Anordnen der Umrandung (11) der Haube, die sich am Umfang ihres Lochs (8) erstreckt, in Überlappung mit der Auflagekante (13) des Kranzes,
- Einfügen der Wanne (5) in das Loch, bis die Umrandung zwischen der Auflagefläche (10) der Wanne und der Auflagekante eingezwickt wird und ihr Eingriff an der Bewehrung und/oder am Kranz hergestellt wird,
- Anordnen der erhaltenen Baugruppe in einer Form und Einspritzen einer Vorläufermischung eines elastisch komprimierbaren Schaums in die Haube, um den Polsterblock (3) herzustellen, der die Bewehrung, die Haube, den Kranz und die Wanne umformt.

## Claims

1. Component (1) of a motor vehicle seat, said component comprising:
- a frame (2),
- a padding block (3) made of elastically compressible foam, said block overmoulding said frame,
- a cap (4) for covering said block, said cap being overmoulded by said block,
- a tray (5) for receiving objects, said tray being overmoulded by said block, said tray having an opening (6), the periphery (7) of which is arranged correspondingly with an orifice (8) provided in said cap, said tray being shaped so as to have, at the periphery of said opening, a rim (9) projecting outwards, said rim defining a support surface (10) receiving a border (11) of said cap extending at the periphery of said orifice, said component being **characterised in that**:
- it also comprises a sealing ring (12) for the foam overmoulded by said block, said ring being attached to said frame, said tray being inserted in said ring, said ring having a support edge (13) pressing against said border in such a way as to clamp it between said support surface and said edge, in order to prevent the passage of foam between said tray and said orifice,
- said tray is provided with first interlocking means (14) on said frame and/or on said ring.

2. Component according to claim 1, **characterised in that** the frame (2) comprises a bent metal wire.

3. Component according to one of claims 1 or 2, **characterised in that** the ring (12) is attached to the frame by two interlocking means (15).

4. Component according to any one of claims 1 to 3, **characterised in that** a vacant space (16) is provided between the ring (12) and the tray (5) so as to allow the insertion of foam into said space, in order to reinforce the holding of said tray on said component.

5. Component according to any one of claims 1 to 4, **characterised in that** the support edge (13) is provided with pins threading into the border (11) of the cap (4).

6. Method for producing a component (1) according to any one of claims 1 to 5, said method comprising the following steps:
- inserting the frame (2) into the cap (4),
- before or after insertion of said frame into said cap, attaching the sealing ring (12) to said frame,
- arranging the border (11) of said cap extending at the periphery of its orifice (8) overlapping with the support edge (13) of said ring,
- inserting the tray (5) into said orifice until clamping said border between the support surface (10) of said tray and said support edge and performing its interlocking on said frame and/or on said ring,
- arranging the obtained assembly in a mould and injecting an elastically compressible foam precursor mixture into said cap so as to produce the padding block (3) overmoulding said frame, said cap, said ring and said tray.
